# EUROPEAN PATENT SPECIFICATION

(11) **EP 3 250 816 B1**
(45) Date of publication and mention of the grant of the patent: **14.08.2019**
(21) Application number: 15708255.3
(22) Date of filing: 30.01.2015
(51) Int. Cl.: F03B 17/06, F03B 13/26, F16D 65/12, F16D 65/18, F16D 121/04

(54) **IMPROVED UNDERWATER TURBINE BRAKE**
VERBESSERTE UNTERWASSERTURBINENBREMSE
FREIN DE TURBINE SOUS-MARINE AMÉLIORÉ

(43) Date of publication of application: 06.12.2017
(73) Proprietor: Andritz Hydro Hammerfest (UK) Limited, Glasgow Scotland G2 4JR (GB)
(72) Inventor: BETSCHART, Michael, Glasgow Strathclyde G52 4RU (GB)
(74) Representative: Walker, Stephen
(86) International application number: PCT/GB2015/050229
(87) International publication number: WO 2016/120581

(56) References cited:
- DE-U1-202009 016 149
- GB-A- 1 345 468
- GB-A- 2 467 747
- GB-A- 2 507 730
- JP-A- H0 882 277

## Description

The present invention relates to the field of underwater turbines such as tidal turbines installed in areas of tidal flow. More specifically, the present invention concerns improvements in the brakes employed within such underwater turbines. In a particular embodiment of the invention there is provided an improved brake for controlling the yawing movement of an underwater turbine nacelle.

### Background to the invention

In a body of sea water, the changing tides result in oscillating currents. In order to maximise the effectiveness of underwater turbines which capture energy from the resulting tidal streams, it is necessary to be able to generate power in both directions in which flow takes place.

The Applicant's earlier international publication WO 02/066828 discloses an apparatus for production of energy from currents in bodies of water in which the turbine blades can be twisted at least 180° to allow the turbine to rotate in the same direction when the direction of current flow is reversed.

However, for some operations it is desirable to physically rotate the entire turbine nacelle to face the oncoming tidal flow. GB2441769 in the name of Tidal Generation Limited discloses a means of aligning a water current power generating device with the current flow which employs a hydrodynamic thruster to exert a torque to rotate the main body of the device. This document further discloses the use of position stops to control a final orientation of the main body, as well as a clamp device to clamp the body to the support structure in the new orientation.

An alternative solution is provided in GB2474961 in the name of Voith Patent GmbH, which employs passive yaw angle adjustment effected by the inclusion of aft-swept turbine blades. The aft-swept blades generate asymmetric thrust loads when misaligned with fluid flow which act to align the turbine gondola with the incoming tidal current. This document also discloses the use of position stops - in this case to control a range of movement of the passive yaw arrangement.

GB2467747 in the name of Vector International Limited discloses a clamp arrangement, suitable for clamping a marine turbine assembly to a tower attached to a sea, estuary or river bed, which permits the turbine assembly to face the tide direction and enable movement of the turbine as the tide changes from ingoing to outgoing tide, and release from the tower for removal for maintenance. DE202009016149 in the name of Stronag WEP GmbH discloses a disc brake for an azimuth drive of a wind turbine, which comprises a single disc ring braked by upper and/or lower brake shoe assemblies.

It is also known to employ a motorised pinion and ring gear arrangement housed within a turbine assembly to effect and control the rotation of a tidal turbine nacelle relative to a support structure in an active manner. However, conventional braking systems (or lack of braking systems in some cases) employed in known systems have been found to provide insufficient performance - particularly in tidal applications where turbines are subject to forces of extremely high magnitude.

Accordingly, the Applicant recognises that there is an outstanding requirement for a solution that permits safe and effective braking and/or control of the yawing movement as a tidal turbine rotates to capture energy from a different tidal flow direction.

Accordingly, it is an object of at least one aspect of the present invention to provide a brake that obviates and/or mitigates one or more disadvantages of existing yawing arrangements.

Further aims and objects of the invention will become apparent from reading the following description.

### Summary of the invention

According to a first aspect of the invention, there is provided an underwater turbine yaw brake to restrict or prevent yawing of a nacelle of the underwater turbine about a substantially vertical axis, the yaw brake comprising a plurality of overlapping brake fins and at least one piston, wherein at least one of the brake fins is connected to a fixed (or relatively fixed) portion of the underwater turbine and at least one other of the brake fins is connected to a rotating (or relatively rotating) portion of the underwater turbine, wherein the at least one piston is moveable between a first position in which the overlapping brake fins are urged against one another to restrict or prevent movement of the rotating portion of the underwater turbine, and a second position in which the rotating portion can move relative to the fixed portion, and wherein the brake fins comprise annular discs.

Preferably, the annular discs comprise steel or friction pads. The brake fins may be continuous, or may comprise segments. Individual segments can be arranged in any shape and may be connected or separated.

The annular discs are preferably vertically aligned. In other words, stacked. Alternatively the annular discs may be concentric. In other words, disposed in a single plane.

Optionally, the yaw brake comprises at least two pistons. Optionally, one of the pistons is disposed at one side of the overlapping brake fins and another of the pistons is disposed on the opposite side of the overlapping brake fins. Alternatively, or additionally, at least two pistons are disposed at one side of the overlapping brake fins. The pistons may be continuous with the overlapping brake fins or may be discrete.

Alternatively, the yaw brake comprises a single piston.

Optionally, the yaw brake comprises a first brake block and a second brake block. These may for example take the form of an upper and a lower brake block or an inner and an outer brake block. The first brake block is preferably rotatable relative to the second brake block, and at least one of the brake fins is connected to the first brake block and at least one other of the brake fins is connected to the second brake block.

Optionally, the overlapping brake fins comprise a first set of brake fins and a second set of brake fins, the first set having a mean radius greater than a mean radius of the second set. In this way, the sets of brake fins are radially offset but overlap.

Preferably, the brake fins of each set are spaced apart by a corresponding plurality of spacer blocks. Advantageously, the spacer blocks are of a similar thickness to the brake fins of the other set.

Optionally, the one or more pistons are configured to occupy the second position by default. Alternatively, the one or more pistons are biased towards the first position. Optionally, the one or more pistons are biased by one or more springs. Alternatively, or additionally, the one or more pistons are biased by hydraulic pressure.

Preferably, the one or more pistons are able to occupy a plurality of positions corresponding to a plurality of braking forces.

Optionally, the one or more pistons are moveable under hydraulic pressure. The hydraulic pressure can be controlled or varied to control the position of the one or more pistons and hence the braking force.

Preferably, the yaw brake comprises one or more seals.

According to a second aspect of the invention there is provided an interface for connecting an underwater turbine nacelle to a substructure, the interface comprising a fixed portion and a rotating portion, and a yaw brake according to the first aspect connecting the fixed portion to the rotating portion.

Optionally, the interface comprises an upper cylindrical portion and a lower cylindrical portion, the upper cylindrical portion rotatable relative to the lower cylindrical portion.

Optionally, the interface comprises a portion adapted for location in the substructure, which may be conical.

Optionally, the interface comprises one or more motors arranged to rotate the rotating portion relative to the fixed portion. Optionally, the motor is connected to a spur gear which in turn drives a ring gear. The motor and spur gear may be housed in the rotating portion and the ring gear housed in the fixed portion, or vice versa.

Embodiments of the second aspect of the invention may comprise features corresponding to the preferred or optional features of the first aspect of the invention or vice versa.

According to a third aspect of the invention, there is provided an underwater turbine comprising a yaw brake according to the first aspect.

Embodiments of the third aspect of the invention may comprise features corresponding to the preferred or optional features of the first or second aspects of the invention or vice versa.

According to a fourth aspect of the invention, there is provided a method of rotating an underwater turbine nacelle about a yaw axis, the underwater turbine nacelle comprising one or more rotor blades, wherein the method comprises pitching the one or more rotor blades before or during rotation of the turbine nacelle, nacelle, and controlling the speed of rotation of the turbine nacelle using an underwater turbine yaw brake according to the first aspect.

Pitching while yawing prevents the rotor blades from being exposed to full flow during yawing of the turbine nacelle. This is especially useful in case the turbine nacelle gets stuck during yawing - for example half way in which case the rotor blades and hence the turbine nacelle could be exposed to damaging forces. By pitching the rotor blades, drag can be minimised and/or hydrodynamic behaviour optimised. Furthermore, by reducing overall drag on the turbine nacelle during yawing and/or optimising hydrodynamic behaviour, smaller motors can be employed.

Embodiments of the fourth aspect of the invention may comprise features corresponding to the preferred or optional features of the any other aspect of the invention, or vice versa.

### Brief description of the drawings

Aspects and advantages of the present invention will become apparent upon reading the following detailed description and upon reference to the following drawings (like reference numerals referring to like features) in which:
Figure 1 is a schematic representation of a section through a portion of an interface for connecting a turbine nacelle to an underwater substructure, comprising a yaw brake according to an aspect of the invention;
Figure 2 illustrates in an enlarged view a section through the yaw brake comprised in the interface shown in Figure 1;
Figure 3 is a schematic representation of a section through a portion of an interface comprising an alternative yaw brake according to an aspect of the invention;
Figures 4 and 5 are schematic representations of sections through another alternative yaw brake according to an aspect of the invention;
Figure 6 is a schematic representation of a section through a portion of an alternative interface similar to the view presented in Figure 4; and
Figure 7 is a schematic representation of a cable management system.

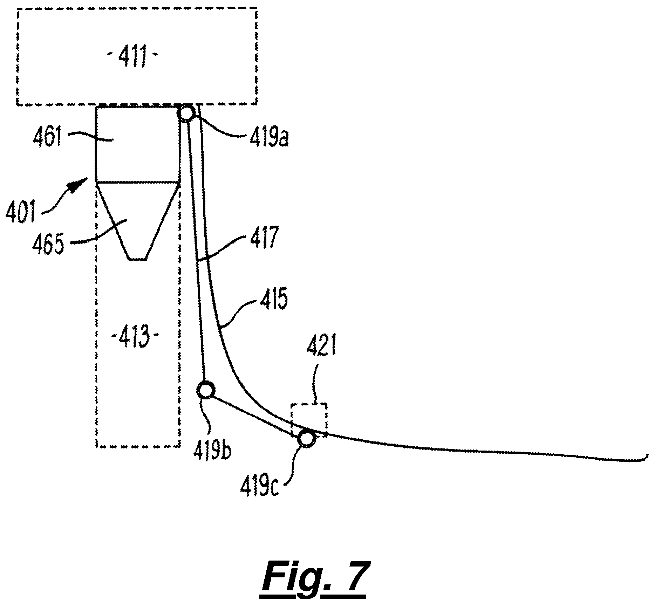

For the avoidance of doubt, the cable management system illustrated in Figure 7 does not form part of the invention.

### Detailed description of preferred embodiments

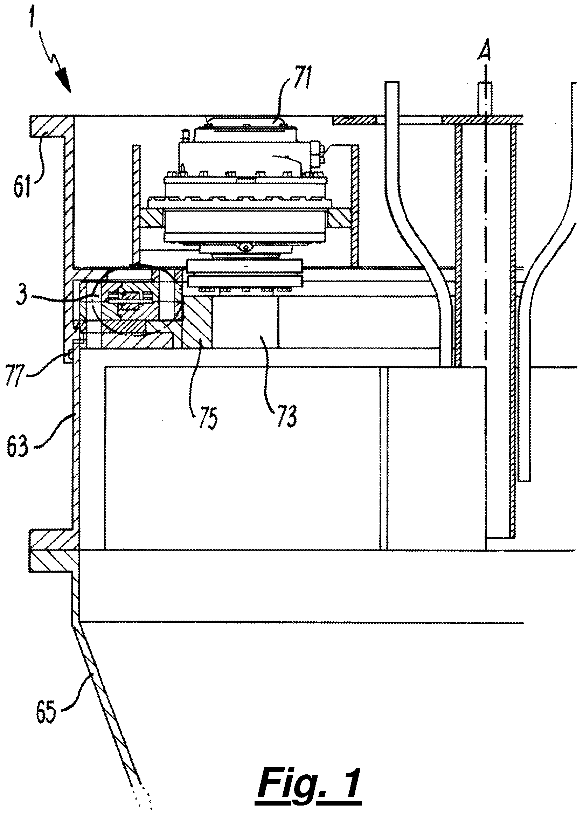

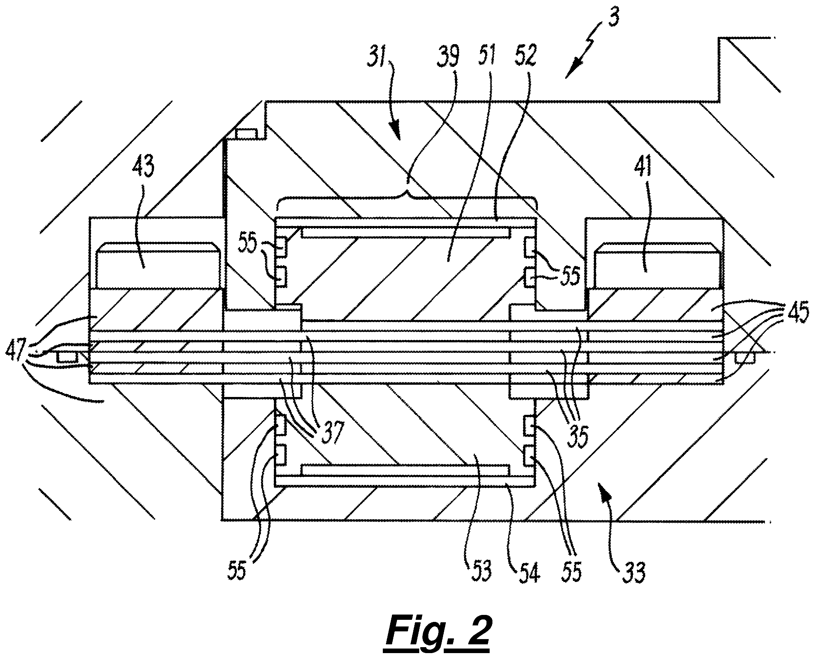

An interface 1 between an underwater turbine nacelle (not shown) and an underwater substructure (not shown) comprising a yaw brake 3 according to an embodiment of the present invention is illustrated in Figure 1. Figure 2 illustrates features of the yaw brake 3 in more detail in an enlarged view.

The interface 1 can be seen to comprise an upper cylindrical portion 61 which is rotatably mounted on a lower cylindrical portion 63 to which a conical portion 65 is fixedly mounted. The conical portion 65 is shaped and configured to be received in a correspondingly shaped and configured socket on the substructure. Rotation about turbine axis A, or yawing, is effected a motor 71 and spur gear 73 attached to the upper cylindrical portion 61 (which rotates) which in turn drives a ring gear 75 attached to the lower cylindrical portion 63 (which remains stationary relative to the substructure).

In Figure 2, where further detail is visible, the yaw brake 3 can be seen to comprise an upper brake block 31 and a lower brake block 33 - the upper brake block 31 operatively connected to the upper cylindrical portion 61 of the interface 1 and the lower brake block 33 operatively connected to the lower cylindrical portion.

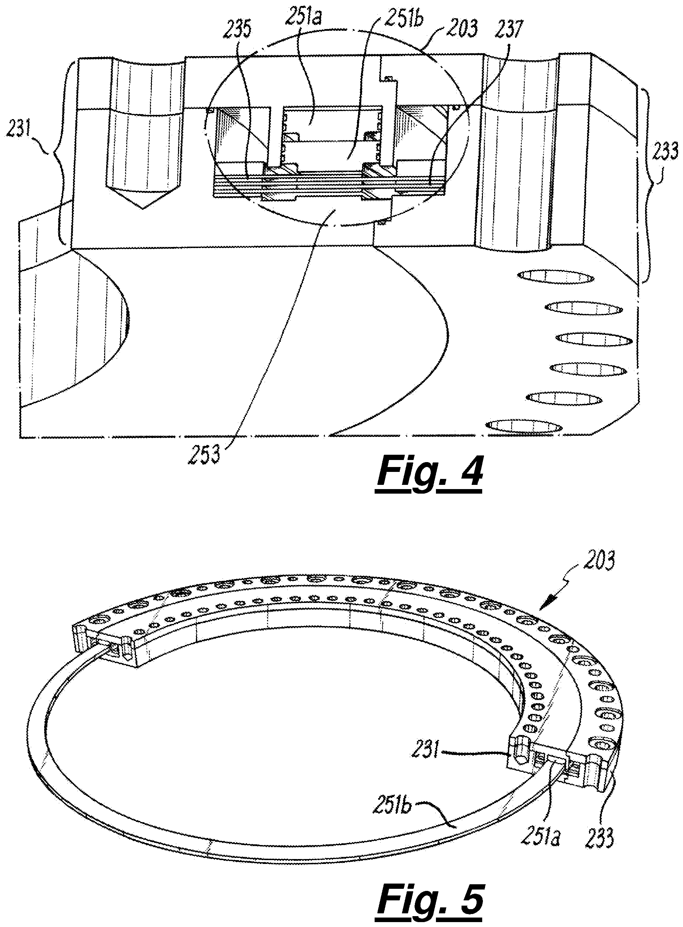

Note that in this embodiment the brake blocks 31,33 extend around the entire circumference of the interface 1 and the upper brake block 31 is can rotate fully above lower brake block 33 (such as illustrated with respect to an alternative embodiment in Figure 5).

Each of the brake blocks 31,33 is provided with a corresponding set of brake fins 35,37 (respectively) which overlap as illustrated. These brake fins, termed upper brake fins 35 and lower brake fins 37, are fixedly mounted to their respective brake blocks 31,33 by a number of circumferentially distributed bolts 41,43 - and spacer blocks 45,47 are provided between adjacent brake fins to set the corresponding spacings. For a close fit between overlapping sets of brake fins 35,37 the spacer blocks 45,47 are of a thickness commensurate with the brake fins 35,37.

The brake fins 35,37 are comprised of annular steel discs - brake fins 35 comprising annular discs having a smaller inner and outer radius than the annular discs of brake fins 37. In the described embodiment, brake fins 35 are all of same or similar dimensions, brake fins 37 are all of same or similar dimensions, and all brake fins 35,37 are centred around the yaw axis A.

In alternative embodiments, the brake fins may be of different dimensions and may be offset from the yaw axis to the same or different degrees. They might also comprise or consist of friction pads in addition to or instead of steel discs.

In any case, a braking region 39 is defined where brake fins 35 and brake fins 37 overlap. In order to effect braking, to dampen or slow the rotation of the upper cylindrical portion 61 - or indeed to hold or lock the upper cylindrical portion 61 in place - relative to the lower cylindrical portion 63, the yaw brake 3 is provided with pistons 51,53 which when actuated urge the overlapping brake fins 35,37 together - increasing the friction between adjacent brake fins 35,37. The pistons 51,53 can be urged against the brake fins 35,37 by pressurising the regions 52,54 behind the pistons 51,53 (respectively) using a hydraulic fluid.

Seals 55 are provided between the pistons 51,53 and the respective brake blocks 31,33 to prevent leak or ingress of fluid.

By controlling the pressure of hydraulic fluid behind the pistons 51,53 the braking force can be varied in order to, for example, slow down or control the speed of rotation of the turbine nacelle as well as prevent any movement if required. When the turbine nacelle needs to be rotated, the hydraulic pressure is reduced to remove or reduce the braking force, the motor 71 driven to rotate the turbine nacelle to the desired orientation, and the hydraulic pressure re-applied to lock the turbine nacelle in place.

Alternatively, the pistons can be biased towards the brake fins so that the yaw brake is applied by default, for example using one or more springs or hydraulic pressure. In such a configuration, the yaw brake can be disengaged by pressurising the space between the pistons and/or the brake fins to urge the pistons away from the brake fins. When the turbine nacelle needs to be rotated, the hydraulic pressure is applied to remove or reduce the braking force, the motor driven to rotate the turbine nacelle to the desired orientation, and the hydraulic pressure removed to lock the turbine nacelle in place.

In either of the above embodiments, the Applicant has discovered that additional benefits are achieved by controlling the pitch of the rotor blades while the turbine nacelle is rotated about the yaw axis. Appropriate pitching can be used to prevent the rotor blades from being fully exposed to tidal flow - particularly a concern if due to some mechanical (or other) failure the turbine nacelle is stopped mid-way through a change from one tidal flow orientation to another.

The person skilled in the art will recognise that this approach will actually find utility in any tidal turbine, where there is always a desire to minimise unwanted loads on the turbine and its components.

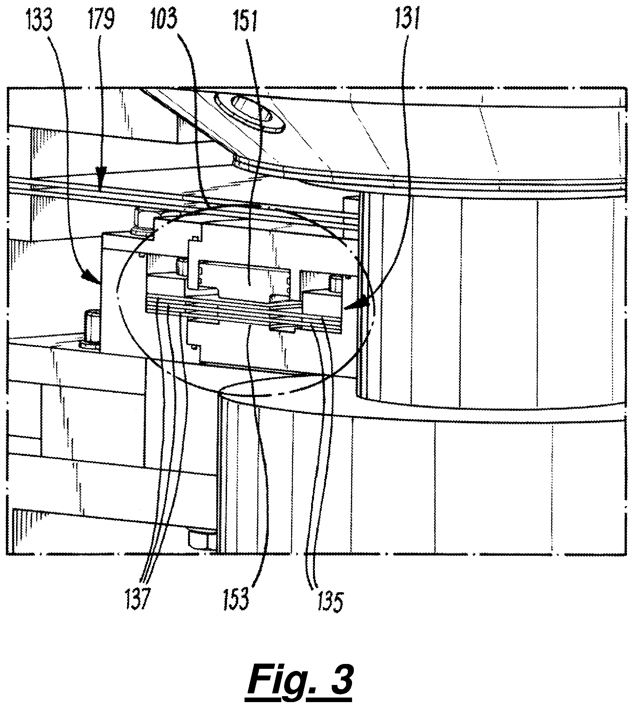

While this embodiment describes the use of two opposed pistons, Figure 3 illustrates an alternative embodiment of a yaw brake 103 according to the invention which employs a single piston 151 which is urged (or, in an alternative embodiment, biased - for example by one or more springs and/or hydraulic pressure) towards opposing surface 153 to press the brake fins 135,137 together. Furthermore, rather than employing upper and lower brake blocks, the yaw brake 103 can be seen to comprise inner 131 and outer 133 brake blocks. Also in this embodiment, it can be seen that there is one less inner brake fin 135 than outer brake fins 137.

Figures 4 and 5 illustrate another embodiment of a yaw brake 203 according to the invention. In this embodiment, two pistons 251a, 251b are disposed on a same side of brake fins 235,237. Similarly to the arrangement shown in Figure 3, piston 251b (or piston 251a and piston 251b) is urged (or, in an alternative embodiment, biased - for example using one or more springs and/or hydraulic pressure) towards opposing surface 253 to press the brake fins 235,237 together to effect braking. The yaw brake 203 may be mounted in a turbine, or a turbine interface, in such a way that inner brake block 231 can be connected to either the stationary or the rotating part of the turbine/interface, and outer brake block 233 connected to the other part (i.e. rotating or stationary, respectively).

Figure 5 illustrates, by virtue of the cut-away view, the generally annular disc of the piston 251b. Piston 251a is similarly shaped and positioned directly above piston 251b. The brake fins 235,237 comprise relatively flat annular discs which also extend completely around the annular yaw brake 203.

This particular arrangement of pistons 251a, 251b has particular advantages in relation to redundancies and fail-safe measures. In normal operation, the space between the pistons 251a, 251b can be pressurised which not only pushes piston 251a upwards but pushes piston 251b downwards to engage the brake fins 235,237. If this actuation method fails, the space behind piston 251a can be pressurised, which urges piston 251a against piston 251b, which again engages the brake fins 235,237.

As may also be true for the preceding embodiments, there is no need to apply pressure between the brake fins 235,237 and piston 251b to push the pistons 251a, 251b up/away from the brake fins 235,237 to disengage the brake - unless there is a bias applied to one or both of the pistons 251a, 251b to brake by default. Such braking bias may be applied using one or more springs for example and/or by hydraulic pressure.

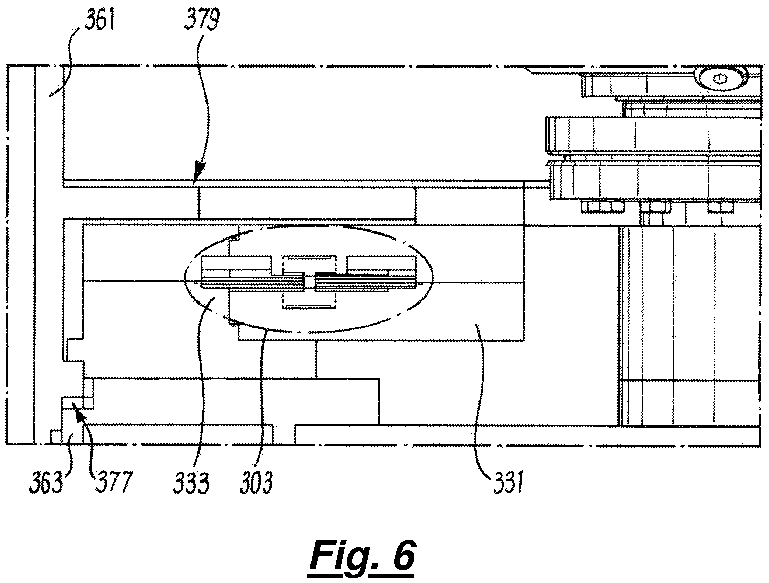

Figure 6 illustrates a section through a portion of an alternative interface, similar to the view of the embodiment presented in Figure 4, which can be seen to comprise a yaw brake 303 similar to those in the embodiments described above.

This view shows upper cylindrical portion 361 rotatably mounted above lower cylindrical portion 363. The upper cylindrical portion 361 is coupled to the inner brake block 331 via compensation fin 379 which is an annular steel disc. The lower cylindrical portion 363 is coupled directly to the outer brake block 333. As in previous embodiments, braking can be effected (or removed) by the application of hydraulic pressure. A bearing surface 377 is provided on the lower cylindrical portion 363, and the upper cylindrical portion 361 rotates across this surface 377.

The Applicant has realised that in use, this bearing surface 377 may be abraded over time. As this wears away, the contact between the upper cylindrical portion 361 and the bearing surface 377 is reduced - which can result in mechanical problems such as warping of the upper cylindrical portion.

The compensation fin 379 (or fins as indicated by reference numeral 179 in Figure 3) is sufficiently flexible to permit a degree of vertical displacement or drop of the upper cylindrical portion 361. In other words, as the bearing 377 becomes thinner, there is sufficient clearance in the system to allow the upper cylindrical portion 361 to lower accordingly and the flexible fin 379 allows this lowering to take place. Thus contact with the bearing surface 377 is maintained and mechanical stability preserved.

The compensation fin 379 may comprise a rubber or plastic material, or indeed a metal such as used in the construction of the remainder of the interface.

The person skilled in the art will again recognise that this approach will actually find utility in any turbine where there is a desire to maintain physical contact between a rotating part and a bearing surface.

Note that while the invention has been described as extending around the entire circumference of the interface, it will be understood that it might instead extend only around a portion of the circumference sufficient to permit a desired yaw range.

Also, while the invention has been described in the context of an interface between a turbine nacelle and a substructure, it will be understood that the yaw brake might be employed within a direct connection between a turbine nacelle and a substructure. Furthermore, the brake might find utility in other components of a turbine, such as in a rotor brake.

It should also be noted that the brake of the invention may be supplemented by use of another braking system such as a caliper brake. Furthermore, a rotor lock or yaw lock may be employed, in which one or more pins may be inserted and retracted from corresponding holes in a locking disc to prevent unwanted rotation.

An alternative interface 401 between an underwater turbine nacelle 411 and an underwater substructure 413 is illustrated in Figure 7. The interface 401, which does not form part of the invention, can be seen to comprise an upper cylindrical portion 461 which is rotatably mounted relative to a lower conical portion 465, which when installed is fixed relative to the substructure 413.

In order to support a cable 415 during installation, the interface 401 is provided with a support arm 417 which is mounted to the interface by a first hinge 419a. Additional hinges 419b,419c are provided to provide flexibility although the range of movement is preferably limited to maintain a shape and orientation that holds the cable clear of the substructure 413 as the turbine nacelle 411 is being installed.

A ballast weight 421 is attached to the arm 417 to control buoyancy and again maintain shape and orientation of the arm 417 as the turbine nacelle 411 is being installed or indeed removed. The advantage over alternative arrangements is that the cable management system is independent from the substructure itself and is capable of controlling the position and orientation of the cable and subsequently supporting the cable without the need for corresponding support or the like from the substructure which otherwise increases complexity and reduces reliability.

The invention provides a brake for an underwater turbine which comprises a plurality of overlapping brake fins which are urged against one another to restrict or prevent movement of a rotating portion of the underwater turbine and/or urged apart to allow the rotating portion to move relative to a fixed portion. An interface for connecting a turbine nacelle to a substructure comprising such a brake is also provided. The invention also provides a method of rotating a turbine nacelle about a yaw axis, comprising pitching the turbine rotor blades before or during rotation of the turbine nacelle to reduce drag. There is also provided a means of compensating for bearing wear in a yawing turbine, comprising a coupling which is adapted to permit relative displacement between the first portion and the second portion corresponding to the amount of bearing wear. Finally, the invention provides a cable management system for handling a cable during installation of a turbine nacelle on a substructure comprising a support arm to support a cable connected to the turbine nacelle as the interface is lowered onto or raised from the substructure.

Throughout the specification, unless the context demands otherwise, the terms 'comprise' or 'include', or variations such as 'comprises' or 'comprising', 'includes' or 'including' will be understood to imply the inclusion of a stated integer or group of integers, but not the exclusion of any other integer or group of integers. Furthermore, relative terms such as "up", "down", "top", "bottom", "upper", "lower", "upward" and "downward" are used herein to indicate directions and locations as they apply to the appended drawings and will not be construed as limiting the invention and features thereof to particular arrangements or orientations.

The foregoing description of the invention has been presented for the purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims. In particular, it will be appreciated that features of the embodiments described herein may be interchanged with or added to one another in alternative embodiments of the invention, and that combinations of features other than those expressly claimed are within the scope of the invention.

For example, the brake fins may be continuous, or may comprise one or more segments. Individual segments can be arranged in any shape and may be connected or separated. Furthermore, the pistons may be continuous with the overlapping brake fins or may be discrete. Alternatively, the brake may comprise a single piston. Also, while the annular discs are described and illustrated as being vertically aligned or stacked, they may be arranged concentrically or in a same single plane.

## Claims

1. An underwater turbine yaw brake (3, 103, 203, 303) to restrict or prevent yawing of a nacelle of the underwater turbine about a substantially vertical axis (A), the brake (3, 103, 203) comprising a plurality of overlapping (39) brake fins (35,37, 135,137, 235,237) and at least one piston (51,53, 151, 251a, 251b), wherein at least one of the brake fins (35,37, 135,137, 235,237) is connected to a fixed portion (63, 363) of the underwater turbine and at least one other of the brake fins (35,37, 135,137, 235,237) is connected to a rotating portion (61, 361) of the underwater turbine, wherein the at least one piston (51,53, 151, 251a, 251b) is moveable between a first position in which the overlapping brake fins (35,37, 135,137, 235,237) are urged against one another to restrict or prevent movement of the rotating portion (61, 361) of the underwater turbine, and a second position in which the rotating portion (61, 361) can move relative to the fixed portion (63, 363), **characterised in that** the brake fins (35,37, 135,137, 235,237) comprise annular discs.

2. The underwater turbine yaw brake (3, 103, 203, 303) according to claim 1, wherein the annular discs comprise steel or friction pads.

3. The underwater turbine yaw brake (3, 103, 203, 303) according to any preceding claim, wherein the brake fins (35,37, 135,137, 235,237) are continuous or comprise segments.

4. The underwater turbine yaw brake (3, 103, 203, 303) according to any preceding claim, wherein the annular discs are vertically aligned or concentric.

5. The underwater turbine yaw brake (3) according to any preceding claim, wherein the yaw brake (3) comprises at least two pistons (51,53), wherein one of the pistons (51) is disposed at one side of the overlapping brake fins (35,37)) and another of the pistons (53) is disposed on the opposite side of the overlapping brake fins (35,37).

6. The underwater turbine yaw brake (3, 103, 203, 303) according to any preceding claim, wherein the at least one piston (51,53, 151, 251a, 251b) is continuous with the overlapping brake fins (35,37, 135,137, 235,237).

7. The underwater turbine yaw brake (3, 103, 203, 303) according to any preceding claim, wherein the yaw brake (3, 103, 203, 303) comprises a first brake block (31, 131, 231, 331) and a second brake block (33, 133, 233, 333), wherein the first brake block (31, 131, 231, 331) is rotatable relative to the second brake block (33, 133, 233, 333), and at least one of the brake fins (35, 135, 235) is connected to the first brake block (31, 131, 231, 331) and at least one other of the brake fins (37, 137, 237) is connected to the second brake block (33, 133, 233, 333).

8. The underwater turbine yaw brake (3, 103, 203, 303) according to any preceding claim, wherein the overlapping brake fins (35,37, 135,137, 235,237) comprise a first set of brake fins (37, 137, 237) and a second set of brake fins (35, 135, 235), the first set (37, 137, 237) having a mean radius greater than a mean radius of the second set (35, 135, 235).

9. The underwater turbine yaw brake (3) according to claim 8, wherein the brake fins of each set (35,37) are spaced apart by a corresponding plurality of spacer blocks (45,47), and wherein the spacer blocks (45,47) are of a similar thickness to the brake fins of the other set (37,35).

10. The underwater turbine yaw brake (3, 103, 203, 303) according to any preceding claim, wherein the at least one piston (51,53, 151, 251a, 251b) is biased towards the first position.

11. The underwater turbine yaw brake (3, 103, 203, 303) according to any preceding claim, wherein the at least one piston (51,53, 151, 251a, 251b) is able to occupy a plurality of positions corresponding to a plurality of braking forces.

12. The underwater turbine yaw brake (3, 103, 203, 303) according to any preceding claim, wherein the at least one piston (51,53, 151, 251a, 251b) is moveable under hydraulic pressure, and wherein hydraulic pressure can be controlled or varied to control the position of the at least one piston (51,53, 151, 251a, 251b) and hence the braking force.

13. An interface (1) for connecting an underwater turbine nacelle to an underwater substructure, the interface comprising a fixed portion (63, 363) and a rotating portion (61, 361), and an underwater turbine yaw brake (3, 103, 203, 303) according to any of claims 1 to 12 connecting the fixed portion (63, 363) to the rotating portion (61, 361).

14. An underwater turbine comprising an underwater turbine yaw brake (3, 103, 203, 303) according to any of claims 1 to 12.

15. A method of rotating an underwater turbine nacelle about a yaw axis (A), the underwater turbine nacelle comprising one or more rotor blades, comprising pitching the one or more rotor blades before or during rotation of the turbine nacelle, and controlling the speed of rotation of the turbine nacelle using an underwater turbine yaw brake (3, 103, 203, 303) according to any of claims 1 to 12.

## Patentansprüche

1. Eine Unterwasserturbinen-Gierbremse (3, 103, 203, 303) zur Einschränkung oder Verhinderung des Gierens einer Gondel der Unterwasserturbine um eine im Wesentlichen vertikale Achse (A), wobei die Bremse (3, 103, 203) eine Vielzahl von überlappenden (39) Bremsflossen (35, 37, 135, 137, 235, 237) und mindestens einen Kolben (51, 53, 151, 251a, 251b) beinhaltet, wobei mindestens eine der Bremsflossen (35, 37, 135, 137, 235, 237) mit einem festen Abschnitt (63, 363) der Unterwasserturbine verbunden ist und mindestens eine der anderen Bremsflossen (35, 37, 135, 137, 235, 237) mit einem rotierenden Abschnitt (61, 361) der Unterwasserturbine verbunden ist, wobei der mindestens eine Kolben (51, 53, 151, 251a, 251b) zwischen einer ersten Position, in der die überlappenden Bremsflossen (35, 37, 135, 137, 235, 237) gegeneinander gedrückt werden, um die Bewegung des rotierenden Abschnitts (61, 361) der Unterwasserturbine einzuschränken oder zu verhindern, und einer zweiten Position, in der sich der rotierende Abschnitt (61, 361) relativ zum festen Abschnitt (63, 363) bewegen kann, **dadurch gekennzeichnet, dass** die Bremsflossen (35, 37, 135, 137, 235, 237) Ringscheiben beinhalten.

2. Die Unterwasserturbinen-Gierbremse (3, 103, 203, 303) nach Anspruch 1, wobei die Ringscheiben Stahl oder Reibbeläge beinhalten.

3. Die Unterwasserturbinen-Gierbremse (3, 103, 203, 303) nach einem der vorhergehenden Ansprüche, wobei die Bremsflossen (35, 37, 135, 137, 235, 237) durchgehend sind oder Segmente beinhalten.

4. Die Unterwasserturbinen-Gierbremse (3, 103, 203, 303) nach einem der vorhergehenden Ansprüche, wobei die Ringscheiben vertikal ausgerichtet oder konzentrisch sind.

5. Die Unterwasserturbinen-Gierbremse (3) nach einem der vorhergehenden Ansprüche, wobei die Gierbremse (3) mindestens zwei Kolben (51, 53) beinhaltet, wobei einer der Kolben (51) an einer Seite der überlappenden Bremsflossen (35,37) und ein anderer der Kolben (53) auf der gegenüberliegenden Seite der überlappenden Bremsflossen (35, 37) angeordnet ist.

6. Die Unterwasserturbinen-Gierbremse (3, 103, 203, 303) nach einem der vorhergehenden Ansprüche, wobei der mindestens eine Kolben (51, 53, 151, 251a, 251b) mit den überlappenden Bremsflossen (35, 37, 135, 137, 235, 237) durchgehend ist.

7. Eine Unterwasserturbinen-Gierbremse (3, 103, 203, 303) nach einem der vorhergehenden Ansprüche, wobei die Gierbremse (3, 103, 203, 303) einen ersten Bremsklotz (31, 131, 231, 331) und einen zweiten Bremsklotz (33, 133, 233, 333) umfasst, wobei der erste Bremsklotz (31, 131, 231, 331) relativ zum zweiten Bremsklotz (33, 133, 233, 333) rotierbar ist und mindestens eine der Bremsflossen (35, 135, 235) mit dem ersten Bremsklotz (31, 131, 231, 331) verbunden ist sowie mindestens eine andere der Bremsflossen (37, 137, 237) mit dem zweiten Bremsblock (33, 133, 233, 333) verbunden ist.

8. Die Unterwasserturbinen-Gierbremse (3, 103, 203, 303) nach einem der vorhergehenden Ansprüche, wobei die überlappenden Bremsflossen (35, 37, 135, 137, 235, 237) einen ersten Satz von Bremsflossen (37, 137, 237) und einen zweiten Satz von Bremsflossen (35, 135, 235) umfassen, wobei der erste Satz (37, 137, 237) einen mittleren Radius hat, der größer ist als ein mittlerer Radius des zweiten Satzes (35, 135, 235).

9. Die Unterwasserturbinen-Gierbremse (3) nach Anspruch 8, wobei die Bremsflossen jedes Satzes (35, 37) durch eine entsprechende Vielzahl von Abstandsblöcken (45, 47) voneinander beabstandet sind und wobei die Abstandsblöcke (45, 47) eine ähnliche Dicke wie die Bremsflossen des anderen Satzes (37, 35) haben.

10. Die Unterwasserturbinen-Gierbremse (3, 103, 203, 303) nach einem der vorhergehenden Ansprüche, wobei der mindestens eine Kolben (51, 53, 151, 251a, 251b) in Richtung der ersten Position vorgespannt ist.

11. Die Unterwasserturbinen-Gierbremse (3, 103, 203, 303) nach einem der vorhergehenden Ansprüche, wobei der mindestens eine Kolben (51, 53, 151, 251a, 251b) mehrere Positionen einnehmen kann, die mehreren Bremskräften entsprechen.

12. Die Unterwasserturbinen-Gierbremse (3, 103, 203, 303) nach einem der vorhergehenden Ansprüche, wobei der mindestens eine Kolben (51, 53, 151, 251a, 251b) unter Hydraulikdruck bewegbar ist und wobei Hydraulikdruck gesteuert oder variiert werden kann, um die Position des mindestens einen Kolbens (51, 53, 151, 251a, 251b) und damit die Bremskraft zu steuern.

13. Eine Schnittstelle (1) zur Verbindung einer Unterwasserturbinengondel mit einem Unterwasser-Unterbau, wobei die Schnittstelle einen festen Abschnitt (63, 363) und einen rotierenden Abschnitt (61, 361) umfasst, und eine Unterwasserturbinen-Gierbremse (3, 103, 203, 303) nach einem der Ansprüche 1 bis 12, die den festen Abschnitt (63, 363) mit dem rotierenden Abschnitt (61, 361) verbindet.

14. Eine Unterwasserturbine, die eine Unterwasserturbinen-Gierbremse (3, 103, 203, 303) nach einem der Ansprüche 1 bis 12 beinhaltet.

15. Ein Verfahren zur Rotation einer Unterwasserturbinengondel um eine Gierachse (A), wobei die Unterwasserturbinengondel eines oder mehrere Rotorblätter beinhaltet, wobei das eine oder die mehreren Rotorblätter vor oder während der Rotation der Turbinengondel geneigt werden und die Rotationsgeschwindigkeit der Turbinengondel mit einer Unterwasserturbinen-Gierbremse (3, 103, 203, 303) nach einem der Ansprüche 1 bis 12 gesteuert wird.

## Revendications

1. Un frein de lacet de turbine sous-marine (3, 103, 203, 303) pour restreindre ou empêcher les mouvements en lacet d'une turbine sous-marine par rapport à un axe vertical (A), le frein (3, 103, 203) comprenant plusieurs ailettes de frein (39) se chevauchant (35, 37, 135, 137, 235, 237) et au moins un piston (51, 53, 151, 251a, 251b), dans lequel au moins une ailette de frein (35, 37, 135, 137, 235, 237) est raccordée à une partie fixe (63, 363) de la turbine sous-marine et au moins une autre ailette de frein (35, 37, 135, 137, 235, 237) est raccordée à une partie rotative (61, 361) de la turbine sous-marine, dans lequel au moins un piston (51, 53, 151, 251a, 251b) peut se déplacer entre une première position dans laquelle les ailettes de frein se chevauchant (35, 37, 135, 137, 235, 237) sont très serrées l'une contre l'autre pour restreindre ou empêcher le mouvement de la partie rotative (61, 361) de la turbine sous-marine, et une seconde position dans laquelle la partie rotative (61, 361) peut se déplacer par rapport à la partie fixe (63, 363), **caractérisé par le fait que** les ailettes de frein (35, 37, 135, 137, 235, 237) comprennent des disques annulaires.

2. Le frein de lacet de turbine sous-marine (3, 103, 203, 303) conforme à la revendication 1, dans lequel les disques annulaires comprennent des patins en acier ou des patins de friction.

3. Le frein de lacet de turbine sous-marine (3, 103, 203, 303) conforme à l'une des revendications précédentes, dans lequel les ailettes de frein (35, 37, 135, 137, 235, 237) sont continues ou formées de segments.

4. Le frein de lacet de turbine sous-marine (3, 103, 203, 303) conforme à l'une des revendications précédentes, dans lequel les disques annulaires sont alignés verticalement ou sont concentriques.

5. Le frein de lacet de turbine sous-marine (3) conforme à l'une des revendications précédentes, dans lequel le frein de lacet (3) comprend au moins deux pistons (51, 53), l'un des pistons (51) étant disposé sur un côté des ailettes de frein se chevauchant (35, 37) et l'autre piston (53) étant disposé sur le côté opposé des ailettes de frein se chevauchant (35, 37).

6. Le frein de lacet de turbine sous-marine (3, 103, 203, 303) conforme à l'une des revendications précédentes, dans lequel au moins un piston (51, 53, 151, 251a, 251b) est en continuité avec les ailettes de frein se chevauchant (35, 37, 135, 137, 235, 237).

7. Le frein de lacet de turbine sous-marine (3, 103, 203, 303) conforme à l'une des revendications précédentes, dans lequel le frein de lacet (3, 103, 203, 303) comprend une première mâchoire de frein (31, 131, 231, 331) et une seconde mâchoire de frein (33, 133, 233, 333), dans lequel la première mâchoire de frein (31, 131, 231, 331) peut tourner par rapport à la seconde mâchoire de frein (33, 133, 233, 333), et dans lequel au moins une des ailettes de frein (35, 135, 235) est raccordée à la première mâchoire de frein (31, 131, 231, 331) et dans lequel une autre ailette de frein (37, 137, 237) est raccordée à la seconde mâchoire de frein (33, 133, 233, 333).

8. Le frein de lacet de turbine sous-marine (3, 103, 203, 303) conforme à l'une des revendications précédentes, dans lequel les ailettes de frein se chevauchant (35, 37, 135, 137, 235, 237) comprennent un premier ensemble d'ailettes (37, 137, 237) et un second ensemble d'ailettes (35, 135, 235), le premier ensemble (37, 137, 237) ayant un rayon moyen supérieur au rayon moyen du second ensemble (35, 135, 235).

9. Le frein de lacet de turbine sous-marine (3) conforme à la revendication 8, dans lequel les ailettes de frein de chaque ensemble (35, 37) sont espacées par plusieurs entretoises (45, 47), et dans lequel les entretoises (45, 47) ont la même épaisseur que les ailettes de frein de l'autre ensemble (37, 35).

10. Le frein de lacet de turbine sous-marine (3, 103, 203, 303) conforme à l'une des revendications précédentes, dans lequel au moins un piston (51, 53, 151, 251a, 251b) est incliné vers la première position.

11. Le frein de lacet de turbine sous-marine (3, 103, 203, 303) conforme à l'une des revendications précédentes, dans lequel au moins un piston (51, 53, 151, 251a, 251b) peut occuper plusieurs positions correspondant à plusieurs forces de freinage.

12. Le frein de lacet de turbine sous-marine (3, 103, 203, 303) conforme à l'une des revendications précédentes, dans lequel au moins un piston (51, 53, 151, 251a, 251b) peut se déplacer sous l'effet de la pression hydraulique, et dans lequel la pression hydraulique peut être régulée ou modifiée pour commander la position d'au moins un piston (51, 53, 151, 251a, 251b) et donc peut commander la force de freinage.

13. Une interface (1) pour raccorder une nacelle de turbine sous-marine à une sous-structure sous-marine, l'interface comprenant une partie fixe (63, 363) et une partie rotative (61, 361), et un frein de lacet de turbine sous-marine (3, 103, 203, 303) conforme à l'une des revendications 1 à 12, raccordant la partie fixe (63, 363) à la partie rotative (61, 361).

14. Une turbine sous-marine comprenant un frein de lacet de turbine sous-marine (3, 103, 203, 303) conforme à l'une des revendications 1 à 12.

15. Une méthode pour faire tourner une nacelle de turbine sous-marine par rapport à un axe de lacet (A), la nacelle de turbine sous-marine comprenant une ou plusieurs pales rotatives, une ou plusieurs pales rotatives pouvant être inclinées avant ou pendant la rotation de la nacelle de la turbine et commandant ainsi la vitesse de rotation de la nacelle de turbine en utilisant un frein de lacet de turbine sous-marine (3, 103, 203, 303) conforme à l'une des revendications 1 à 12.
